# NEUE EUROPÄISCHE PATENTSCHRIFT

(11) **EP 1 407 120 B2**
(45) Veröffentlichungstag und Bekanntmachung des Hinweises auf die Entscheidung über den Einspruch: **09.01.2019**
(45) Hinweis auf die Patenterteilung: 11.02.2009
(21) Anmeldenummer: 02758324.4
(22) Anmeldetag: 08.07.2002
(51) Int. Cl.: F01K 23/06, F02C 3/28

(54) **VERFAHREN ZUM BETRIEB EINES BRENNERS EINER GASTURBINE SOWIE KRAFTWERKSANLAGE**
METHOD FOR OPERATING A BURNER OF A GAS TURBINE AND A POWER PLANT
PROCEDE POUR FAIRE FONCTIONNER UN BRULEUR D'UNE TURBINE A GAZ ET CENTRALE POUR LA MISE EN OEUVRE DUDIT PROCEDE

(30) Priorität: 19.07.2001 EP 01117470
(43) Veröffentlichungstag der Anmeldung: 14.04.2004
(73) Patentinhaber: Siemens Aktiengesellschaft, 80333 München (DE)
(72) Erfinder: HANNEMANN, Frank, 91054 Buckenhof (DE); HEILOS, Andreas, 45468 Mülheim (DE); HUTH, Michael, 45239 Essen (DE); KÖSTLIN, Berthold, 47057 Duisburg (DE)
(86) Internationale Anmeldenummer: PCT/EP2002/007589
(87) Internationale Veröffentlichungsnummer: WO 2003/008768

(56) Entgegenhaltungen:
- DE-C- 19 837 251
- US-A- 4 341 069
- US-A- 4 697 415
- US-A- 5 345 756
- HAUPT G: "EFFIZIENTE UND UMWELTFREUNDLICHE STROMERZEUGUNG IM GUD-KRAFTWERK MIT INTEGRIERTER VERGASUNG" ELEKTROTECHNIK UND INFORMATIONSTECHNIK, SPRINGER VERLAG, WIEN, AT, Bd. 113, Nr. 2, 1. Februar 1996 (1996-02-01), Seiten 102-108, XP000555695 ISSN: 0932-383X

## Beschreibung

Die Erfindung betrifft ein Verfahren zum Betrieb eines Brenners einer Gasturbine, bei dem ein fossiler Brennstoff in einer Vergasungseinrichtung vergast und vergaster Brennstoff als Synthesegas dem der Gasturbine zugeordneten Brenner zur Verbrennung zugeführt wird. Die Erfindung betrifft weiterhin eine Kraftwerksanlage, insbesondere zur Durchführung des Verfahrens, mit einer Gasturbine, der eine Brennkammer mit mindestens einem Brenner zugeordnet ist. Der Brennkammer ist ein Brennstoffsystem vorgeschaltet, das eine Vergasungseinrichtung für fossilen Brennstoff und eine von der Vergasungseinrichtung abzweigende und in die Brennkammer mündende Gasleitung umfasst.

Eine Gas- und Dampfturbinenanlage mit integrierter Vergasung von fossilem Brennstoff umfasst üblicherweise eine Vergasungseinrichtung für den Brennstoff, die ausgangsseitig über eine Anzahl von zur Gasreinigung vorgesehenen Komponenten mit der Brennkammer der Gasturbine verbunden ist. Der Gasturbine kann dabei rauchgasseitig ein Abhitzedampferzeuger nachgeschaltet sein, dessen Heizflächen in den Wasser-Dampf-Kreislauf einer Dampfturbine geschaltet sind. Eine derartige Anlage ist beispielsweise aus der GB-A 2 234 984 oder aus der US 4,697,415 bekannt.

Zur Reduktion des Schadstoffausstoßes bei der Verbrennung des vergasten fossilen Brennstoffs oder Synthesegases kann in die Gasleitung ein Sättiger geschaltet sein, in dem das Synthesegas beim Betrieb der Anlage mit Wasserdampf beladen wird. Dazu durchströmt der vergaste Brennstoff den Sättiger im Gegenstrom zu einem Wasserstrom, der in einem als Sättigerkreislauf bezeichneten Wasserkreislauf geführt ist. Für einen besonders hohen Wirkungsgrad ist dabei eine Einkopplung von Wärme aus dem Wasser-Dampf-Kreislauf einer Gas- und Dampfturbinenanlage in den Sättigerkreislauf vorgesehen.

Durch den Kontakt mit dem im Sättigerkreislauf geführten aufgeheizten Wasserstrom im Sättiger wird der vergaste Brennstoff mit Wasserdampf aufgesättigt und erfährt in begrenztem Umfang eine Aufheizung. Aus wärmetechnischen und auch aus betrieblichen Gründen kann dabei eine weitere Aufheizung des Brennstoffs vor dessen Zuführung in die Brennkammer der Gasturbine erforderlich sein.

In der DE 19 832 293 A1 ist eine Gas- und Dampfturbinenanlage mit einem der Gasturbine rauchgasseitig nachgeschalteten Abhitzedampferzeuger beschrieben. Die Heizflächen des Abhitzedampferzeugers sind dabei in den Wasser-Dampf-Kreislauf der Dampfturbine geschaltet. Zur integrierten Vergasung eines fossilen Brennstoffs für die Brennkammer der Gasturbine ist der Brennkammer über eine Brennstoffleitung eine Vergasungseinrichtung für Brennstoff vorgeschaltet. Für einen besonders hohen Anlagenwirkungsgrad ist in die Brennstoffleitung zwischen der Vergasungseinrichtung und dem Sättiger zusätzlich zu einer Mischvorrichtung zur Zumischung von Stickstoff ein Wärmetauscher primärseitig geschaltet, der sekundärseitig zwischen dem Sättiger und der Brennkammer ebenfalls in die Brennstoffleitung geschaltet ist.

Eine ähnliche Gas- und Dampfturbinenanlage wie in der DE 19 832 293 A1 beschrieben, geht aus der WO 00/20728 hervor. Die dort beschriebene Gas- und Dampfturbinenanlage soll auch bei Verwendung von Öl als fossilem Brennstoff mit besonders hohem Anlagenwirkungsgrad betreibbar sein.

Dazu ist bei der WO/20728 in die Brennstoffleitung in Strömungsrichtung des vergasten Brennstoffs gesehen vor einer Mischvorrichtung zur Zumischung von Stickstoff zum vergasten Brennstoff primärseitig ein Wärmetauscher geschaltet, der sekundärseitig als Verdampfer für ein Strömungsmedium ausgebildet ist. Der Wärmetauscher ist dampfseitig mit der Brennkammer der Gasturbine verbunden. Ein gattungsgemäßes Verfahren wird in der US 5,451,160 beschrieben.

Um einen besonders sicheren Betrieb der Gas- und Dampfturbinenanlage zu gewährleisten, sollte jederzeit eine Zufuhr des Synthesegases in die Brennkammer der Gasturbine gestoppt werden können. Hierzu ist üblicherweise vor der Brennkammer in die Gasleitung eine Schnellschlussarmatur geschaltet. Die Schnellschlussarmatur sperrt bei Bedarf in besonders kurzer Zeit die Gasleitung, so dass kein Synthesegas in die der Gasturbine zugeordnete Brennkammer gelangen kann.

Das Brennstoffsystem umfasst aufgrund der einschlägigen sicherheitstechnischen Vorschriften üblicherweise ein Gasschloss. Ein Gasschloss umfasst zwei Armaturen, beispielsweise Kugelhähne, die für einen Gasdurchfluss zu Öffnen oder zu Schließen sind. Zwischen diesen beiden Armaturen ist eine Zwischenentlastung oder eine Druckleitung angeschlossen. Die Zwischenentlastung kann an eine Fackel angeschlossen sein, über die überschüssiges Gas abgefackelt werden kann. Alternativ zu der Zwischenentlastung kann die Druckleitung angeschlossen werden, die dafür sorgt, dass kein Gas über die Gasschlossarmaturen einströmen kann. Das Gasschloss trennt also das Brennstoffsystem gasdicht in einem ersten Bereich oder das Vergasungssystem stromauf des Gasschlosses und in einem zweiten Bereich oder das sogenannte Gasturbinen-Brennstoffsystem stromab des Gasschlosses.

Eine Gas- und Dampfturbinenanlage mit Vergasungseinrichtung kann sowohl mit dem Synthesegas, das beispielsweise aus Kohle, industriellen Rückständen oder Abfall erzeugt wird, als auch mit einem Zweitbrennstoff, wie z.B. Erdgas oder Öl, betrieben werden. Bei einem Wechsel von Synthesegas auf Zweitbrennstoff oder umgekehrt ist es aus sicherheitstechnischen Gründen erforderlich, den Bereich zwischen dem Gasschloss und der Brennkammer, d.h. das Gasturbinen-Brennstoffsystem, mit einem Inertmedium wie Stickstoff oder Dampf zu spülen.

Zum wahlweisen Betrieb einer Gas- und Dampfturbinenanlage mit dem Synthesegas aus einer Vergasungseinrichtung oder einem Zweit- oder Ersatzbrennstoff muss der Brenner in der der Gasturbine zugeordneten Brennkammer als Zwei- oder Mehrbrennstoffbrenner ausgelegt sein, der sowohl mit dem Synthesegas als auch mit dem Zweitbrennstoff, z.B. Erdgas oder Heizöl je nach Bedarf beaufschlagt werden kann. Der jeweilige Brennstoff wird hierbei über eine Brennstoffpassage im Brenner der Verbrennungszone zugeführt.

Aufgabe der Erfindung ist es, ein Verfahren zum Betrieb eines Brenners einer Gasturbine anzugeben, mit dem ein verbesserter Synthesegasbetrieb erreichbar ist. Eine weitere Aufgabe der Erfindung ist es, eine Kraftwerksanlage, insbesondere zur Durchführung des Verfahrens, anzugeben.

Die erstgenannte Aufgabe wird erfindungsgemäß gelöst durch ein Verfahren zum Betrieb eines Brenners einer Gasturbine, bei dem ein fossiler Brennstoff vergast und vergaster fossiler Brennstoff als Synthesegas dem der Gasturbine zugeordneten Brenner zur Verbrennung zugeführt wird, wobei das Synthesegas in einen ersten Teilstrom und einen zweiten Teilstrom aufgeteilt und die Teilströme dem Brenner zur Verbrennung separat zugeführt werden, wobei zumindest einem der Teilströme Erdgas oder Dampf zur Veränderung des Heizwerts zugemischt wird.

Dabei ist es gemäß der Erfindung auch durchaus möglich mehr als zwei Teilströme vorzusehen und diese jeweils separat dem Brenner zur Verbrennung zuzuführen.

Die Erfindung geht dabei von der Beobachtung aus, dass der Gesamtwirkungsgrad von Kraftwerksanlagen, beispielsweise von Gas- und Dampfturbinenanlagen mit integrierter Vergasung eines fossilen Brennstoffs, umso schlechter wird, je höher der brennstoffseitige Druckverlust in dem mit dem Brennstoff zur Verbrennung beaufschlagten Brenner ist. Der Druckverlust ist hierbei durch den Strömungswiderstand bzw. den Strömungsleitwert des Brenners für das entsprechende Brenngas festgelegt.

Wenn ein Gas eine Leitung durchströmt, dann ist die dabei entstehende Druckdifferenz dem Gasstrom, z.B. dem Gasmassenstrom, proportional. Der Proportionalitätsfaktor heißt Strömungswiderstand. Der Reziprokwert des Strömungswiderstandes wird Strömungsleitwert genannt. Aus oben genannten Wirkungsgradüberlegungen für eine Kraftwerksanlage besteht die Notwendigkeit, diesen Brennerdruckverlust im Auslegungsfall, d.h. z.B. bei Nennlast, möglichst gering zu halten. Daraus resultiert aber, dass bei sehr niedrigen Gasturbinenleistungen bzw. im Leerlauf der Gasturbine sich ein zu niedriger brennstoffseitiger Brennerdruckverlust einstellt und eine ausreichende Stabilität der Verbrennung gegenüber Flammenschwingungen nicht mehr gegeben ist. Daher ist für derartige Anlagenkonzepte der Leistungsbetrieb im Synthesegasmodus nur zwischen Grundlast und einer vom jeweiligen Fall abhängigen minimalen Teillast der Gasturbine möglich.

Mit der Erfindung wird nunmehr ein völlig neuer Weg aufgezeigt, den Brenner einer Gasturbine mit Synthesegas zu betreiben, wobei das aus der Vergasung eines fossilen Brennstoffs entstehende, im Vergleich zu Erdgas niederkalorische, Brenngas dem Brenner in mindestens zwei Teilströmen separat zur Verbrennung zugeführt wird. Hierdurch erweitert sich die im zulässigen Bereich des brennstoffseitigen Brennerdruckverlusts einstellbare Bandbreite des Brennstoffmassenstroms erheblich, wodurch insbesondere gegenüber dem herkömmlichen Brenner-Betrieb geringere Brennstoffmassenströme möglich sind. Durch die Aufteilung des Synthesegases in einen ersten Teilstrom und in einen zweiten separaten Teilstrom oder wahlweise in weitere Teilströme kann dem Brenner Brennstoff an entsprechend räumlich verschiedenen Stellen zur Verbrennung zugeführt werden. Dementsprechend werden zwei oder mehr Verbrennungszonen gebildet, die einem jeweiligen Teilstrom von Synthesegas zugeordnet sind.

Vorteilhafterweise werden hierdurch Verbrennungsinstabilitäten infolge zu niedrigen brennstoffseitigen Brennerdruckverlustes im Synthesegasbetrieb vermieden. Darüber hinaus können sich zukünftig möglicherweise aufwendige konstruktive Modifikationen des Brenners zur Anpassung an den Synthesegasbetrieb erübrigen, insbesondere zur Vermeidung von Brenner- bzw. Brennkammerbrummen. Gegenüber dem Betrieb mit nur einer Synthesegaspassage ist mit der Beaufschlagung des Brenners mit Synthesegas in zumindest zwei Teilströmen allgemein eine verbesserte Möglichkeit durch Einstellung und Optimierung der Fahrweise des Brenners erzielbar. Von besonderem Vorteil erweist sich hierbei, dass die Verbrennung des Synthesegases im Brenner durch Einstellung der Teilströme sehr effizient auf den gewünschten Betriebsmodus des Brenners, z.B. Grundlast oder Teillast oder Leerlauf, gezielt eingestellt und optimiert werden kann. Infolge der erweiterten Möglichkeit der Betriebseinstellungen wird die Anpassung des Systems an veränderte Brennstoffrandbedingungen erleichtert.

Durch diese neue Betriebsweise ist ein gestufter Synthesegasbetrieb möglich. Dieser ermöglicht zum einen einen genügend niedrigen Druckverlust über den Brenner im Volllastfall bei entsprechend nennenswerten Massenströmen aller Teilströme, insbesondere des ersten und des zweiten Teilstroms, und zum anderen auch ein Minimallast- bzw. Leerlaufbetrieb einer dem Brenner zugeordneten Gasturbine bei nur einem nennenswerten Teilstrom von Synthesegas. Dabei kann vorteilhafterweise der erste Teilstrom oder gegebenenfalls weiterer Teilströme und der zweite Teilstrom beim separaten Durchströmen des Brenners und Einströmen in eine jeweilige Verbrennungszone unterschiedlichen Strömungsleitwerten unterworfen sein, wodurch bei einem vorgegebenen Variationsbereich des Brennstoffmassenstromes ein im Vergleich mit nur einem Synthesegasstrom wesentlich kleinere Variationsbreite des Druckverlustes im Brenner erreicht ist.

Vorteilhafterweise ist hierdurch der Druckverlust im Brenner bei Grundlast der Gasturbine im Vergleich zu dem Druckverlust bei einer Minimallast, z.B. im Leerlauf, kleiner als bei einer Einstromkonzeption bei gleichem Brennerdesign.

In einer bevorzugten Ausgestaltung werden der erste Teilstrom und der zweite Teilstrom jeweils geregelt dem Brenner zugeführt. Durch diese Konfiguration sind die Teilströme unabhängig voneinander regelbar, wodurch die Betriebsbandbreite des Brenners erweitert wird. Dabei kann beispielsweise eine Fahrweise gewählt werden, bei der der Gesamtgasmassenstrom an Synthesegas konstant gehalten wird, wobei der erste Teilstrom und der zweite Teilstrom im Hinblick auf die zu erzielende Verbrennungsleistung und einen stabilen Betrieb aufeinander abgestimmt werden.

Erfindungsgemäß wird zumindest einem der Teilströme Erdgas oder Dampf zur Veränderung des Heizwerts zugemischt. Je nach Anforderungen kann der Heizwert eines Teilstroms durch Beimischung von Erdgas oder Dampf dabei erhöht bzw. verringert werden. Vorteilhafterweise können beide Teilströme unabhängig voneinander durch Beaufschlagung mit Dampf oder einem anderen Inertisierungsmedium, wie beispielsweise Stickstoff, inertisiert werden. Für beide Teilströme von Synthesegas ist daher der Heizwert einstellbar, insbesondere ist der Heizwert der Teilströme unterschiedlich einstellbar, wodurch in der jeweiligen Verbrennungszone ein entsprechend unterschiedlicher Wärmeumsatz durch die Verbrennung erzielbar ist. Dadurch steht vorteilhafterweise ein weiterer Freiheitsgrad, nämlich der Heizwert, zur Verfügung, wobei dieser für jeden der Teilströme von Synthesegas individuell je nach den Erfordernissen eingestellt werden kann.

Bevorzugt werden die Teilströme in Abhängigkeit von der zu erbringenden Leistung der Gasturbine eingestellt. Bei dem Verfahren zum Betrieb eines Brenners einer Gasturbine mit dem Synthesegas erweist sich die Regelung der Teilströme, d.h. insbesondere deren jeweilige Größe des Gasmassenstroms oder deren jeweiliger spezifischer Heizwert, in Abhängigkeit von der zu erbringenden Leistung der Gasturbine als besonders vorteilhaft. Hierbei kann beispielsweise die Leistung der Gasturbine auf einen für alle Brennstoffpassagen gemeinsamen Sollwert vorgegeben werden und die Gasströme für jede Passage unabhängig in einem nachgeschalteten Regelkreis in Abhängigkeit der weiter oben beschriebenen Anforderungen, z.B. in einem geschlossenen Regelkreis, entsprechend dem Sollwert nachgeregelt werden.

Bevorzugt ist bei einem Minimallast- oder Leerlaufbetrieb der Gasturbine einer der Teilströme Null. Dieser Betriebsmodus kann somit bereits durch Zustellung eines Teilstroms von Synthesegas zu dem Brenner realisiert werden. Dazu wird vorteilhafterweise derjenige der Teilströme für den Minimallast- oder Leerlaufbetrieb der Gasturbine ausgewählt, der im Hinblick auf einen hierfür erforderlichen Mindestdruckverlust einem entsprechenden Strömungswiderstand beim Durchströmen des Brenners zu der Verbrennungszone erreichbar ist. Bei nennenswertem Strömungswiderstand kann auch bei einem geringen Massenstrom des ausgewählten Teilstroms von Synthesegas eine Verbrennungsinstabilität beispielsweise infolge zu niedrigen Druckgefälles über den Brenner vermieden werden.

Die auf eine Kraftwerksanlage gerichtete Aufgabe wird erfindungsgemäß gelöst durch eine Kraftwerksanlage, insbesondere zur Durchführung des oben beschriebenen Verfahrens, mit einer Gasturbine, der eine Brennkammer mit mindestens einem Brenner zugeordnet ist, und mit einem der Brennkammer vorgeschalteten Brennstoffsystem, das eine Vergasungseinrichtung für fossilen Brennstoff und eine von der Vergasungseinrichtung abzweigende und in die Brennkammer mündende Gasleitung umfasst, wobei Stromauf der Brennkammer von der Gasleitung eine weitere Gasleitung abzweigt, und wobei die Gasleitung an eine erste Brennstoffpassage des Brenners und die weitere Gasleitung an eine von der ersten Brennstoffpassage strömungstechnisch getrennte zweite Brennstoffpassage des Brenners angeschlossen ist, wobei der weiteren Gasleitung Erdgas oder Dampf über eine Zufuhreinrichtung zustellbar ist.

Dabei kann vorteilhafterweise eine am Brenner bereits vorhandene zweite Brennstoffpassage, die üblicherweise als Passage für Erdgas mit hohem Heizwert von typischerweise 40.000 kJ/kg ausgelegt ist nunmehr zusätzlich als zweite, strömungstechnisch von der ersten Brennstoffpassage angeordnete Passage für Synthesegas genutzt werden. Somit weist der Brenner der Kraftwerksanlage zwei Brennstoffpassagen für Synthesegas auf, welches in der Vergasungseinrichtung durch Vergasen des fossilen Brennstoffs bereitgestellt und über die Gasleitung und die weitere Gasleitung der jeweils daran angeschlossenen Brennstoffpassage separat zuführbar ist. Der Strömungsleitwert für Synthesegas kann dabei für die erste Brennstoffpassage und die zweite Brennstoffpassage verschieden sein, wodurch durch eine gezielte Beaufschlagung der Brennstoffpassagen mit einem jeweiligen Teilstrom von Synthesegas eine gestufte, insbesondere zweistufige, Brennstoffzufuhr erreicht ist. Die Kraftwerksanlage ist hierdurch in besonderer Weise für die Verbrennung niederkalorischen Brenngases, z.B. aus der Vergasung von Kohle als fossilen Brennstoff, konzipiert. Durch die gestufte Synthesegaszufuhr erweitert sich vorteilhafterweise die im zulässigen Bereich des brennstoffseitigen Brennerdruckverlusts einstellbare Bandbreite des Brennstoffmassenstroms im Synthesegasbetrieb, und so kann der Brennerdruckverlust im Vollastbetrieb minimiert oder zumindest weitgehend verringert werden.

In einer bevorzugten Ausgestaltung ist in der Gasleitung und der weiteren Gasleitung jeweils eine Regelarmatur vorgesehen, über die der Brennstoffstrom in den zugeordneten Brennstoffpassagen jeweils regelbar ist. Die Gasleitungen mit den Regelarmaturen für Synthesegas sind hierbei parallel geschaltet, so dass jede Armatur den jeweiligen Teilstrom zu der ihr zugeordneten Brennstoffpassage regelt.

Vorzugsweise ist in die Gasleitung ein Gasschloss geschaltet, welches stromauf der Abzweigstelle der weiteren Gasleitung von der Gasleitung angeordnet ist.

Hierdurch wird einerseits die Gasschlossfunktion sichergestellt und andererseits eine Reduzierung der Anzahl von Absperr- und Regelarmaturen erreicht. Stromauf der Abzweigstelle der weiteren Gasleitung von der Gasleitung ist in die Gasleitung vorteilhafterweise eine Schnellschluss- bzw. dicht schließende Armatur vorgesehen.

Die Kraftwerksanlage mit Vergasungseinrichtung kann sowohl mit dem Synthesegas, das beispielsweise aus Kohle oder Rückstandsöl erzeugt wird, als auch mit einem Zweitbrennstoff, wie z.B. Erdgas, betrieben werden. Bei einem Wechsel von Synthesegas auf Zweitbrennstoff oder umgekehrt ist es aus sicherheitstechnischen Gründen erforderlich, den Bereich zwischen dem Gasschloss und der Brennkammer, d.h. das Gasturbinen-Brennstoffsystem mit einem Inertmedium wie Stickstoff oder Dampf zu spülen. Diese Anforderung kann in der Kraftwerksanlage beispielsweise dadurch erreicht werden, dass das in die Gasleitung geschaltete Gasschloss, welches stromauf der Brennkammer angeordnet ist, eine Schnellschlussarmatur, ein Druckentlastungs- oder Überdrucksystem und eine Gasschlossarmatur umfasst. Dadurch ist bei einem Wechsel des dem Brenner der Gasturbine zuzuführenden Gases eine Verdrängung des Synthesegases oder des Zweitbrennstoffes sowie gegebenenfalls Rauchgas aus dem Brennstoffsystem in besonders zuverlässiger Weise gewährleistet, da das zu spülende Volumen vergleichsweise gering ist. Bei einem geringen zu spülenden Volumen erweist sich außerdem eine Spülung in lediglich einer Richtung über beide Brennstoffpassagen als ausreichend, wodurch komplexe Regelmechanismen des Spülvorgangs entfallen können. Bei Umlastung auf einen Zweitbrennstoff, z.B. Erdgas, entfällt ein Spülen der weiteren Gasleitung sowie der zugehörigen Brennstoffpassage. Lediglich bei einem Gasturbinen-Schnellschluss werden beide Brennstoffpassagen, ggf. auch mehrere Brennstoffpassagen, gespült.

Die Spülung erfolgt dabei vorteilhafterweise nur in Vorwärtsrichtung, d.h. in Richtung der Brennkammer respektive des Brenners der Gasturbine. Der Spülvorgang kann alternativ mit Dampf oder Stickstoff, z.B. Rein-Stickstoff, durchgeführt werden. Eine Spülung mit Stickstoff ist aufgrund des geringen zu spülenden Volumens besonders wirtschaftlich. Weiter muss dabei einer in der Kraftwerksanlage angeordneten Dampfturbinenanlage kein Dampf für den Spülvorgang entzogen werden, wodurch der Gesamtwirkungsgrad der Kraftwerksanlage besonders hoch ausfällt. Zusätzlich entfällt die Verwendung hochlegierter Stähle, da keine oder nur geringfügige Korrosionserscheinungen auftreten können. Ein geringes zu spülendes Volumen kann in der Kraftwerksanlage kann durch eine kompakte Anordnung der Komponenten erreicht werden. Ordnet man das Gasschloss und die Schnellschlussarmatur beispielsweise nebeneinander an, so kann die Schnellschlussarmatur die Funktion einer der im Gasschloss vorgesehenen Armaturen übernehmen, wodurch diese Armatur entfallen kann und das zu spülende Volumen des Gasturbinen-Brennstoffsystems besonders klein ausfällt. Durch das vergleichsweise geringere Volumen des Brennstoffsystems wird weiterhin ein Lastabwurf bei Überdrehzahl erheblich einfacher, insbesondere aufgrund des geringeren Nachlaufeffekts in den gasführenden Komponenten.

Als Armaturen für das Gasschloss, welches insbesondere stromauf der Abzweigstelle der weiteren Gasleitung von der Gasleitung angeordnet und in die Gasleitung geschaltet ist, werden üblicherweise Kugelhähne oder Kugelventile eingesetzt. Diese weisen eine besonders hohe Gasdichtigkeit auf. Die Schnellschlussarmatur kann beispielsweise als eine Schnellschlussklappe ausgeführt sein. Abhängig von der Baugröße der Armatur ist hierfür aber jede andere schnellschließende Armatur, wie z.B. ein geeignetes Schnellschluss-Ventil, einsetzbar. Somit ist die Kraftwerksanlage mit der Vergasungseinrichtung im Synthesegasbetrieb oder bei einem Wechsel des Brennstoffs zu einem Zweitbrennstoff besonders sicher betreibbar.

Erfindungsgemäß ist der weiteren Gasleitung Erdgas oder Dampf über eine Zufuhreinrichtung zustellbar. Die weitere Gasleitung, die an die zweite Brennstoffpassage des Brenners angeschlossen ist, kann durch die Beimischung von Erdgas oder Dampf zum Synthesegas im Hinblick auf den Heizwert für den Betrieb der zweiten Brennstoffpassage eingestellt werden. Durch Beimischung von Erdgas zum Synthesegas wird der Heizwert erhöht. Durch Beimischung von Dampf zum Synthesegas kann der Heizwert hingegen verringert werden. Durch gezielte Beimischung von Erdgas oder Dampf über die Zufuhreinrichtung kann der Heizwert sehr genau an den gewünschten Betriebsmodus des Brenners angepasst werden.

Vorzugsweise ist die Kraftwerksanlage als Gas- und Dampfturbinenanlage ausgestaltet, mit einem der Gasturbine rauchgasseitig nachgeschalteten Abhitzedampferzeuger, dessen Heizflächen in den Wasser-Dampf-Kreislauf einer Dampfturbine geschaltet sind.

Weitere Vorteile der Kraftwerksanlage ergeben sich in analoger Weise zu den Vorteilen des oben beschriebenen Verfahrens zum Betrieb eines Brenners einer Gasturbine.

Ein Ausführungsbeispiel der Erfindung wird anhand einer Zeichnung näher erläutert. Darin zeigen teilweise schematisch und nicht maßstäblich
- FIG 1: eine Kraftwerksanlage, wobei der Gasturbine ein Brennstoffsystem mit einer Vergasungseinrichtung vorgeschaltet ist, und
- FIG 2: einen Ausschnitt gemäß Figur 1 mit zugeordnetem Brenner der Gasturbine.

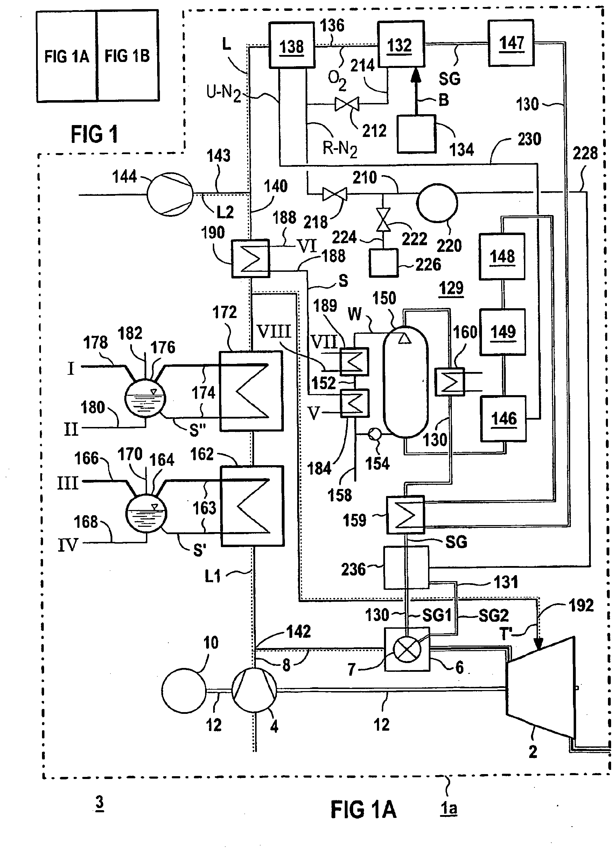

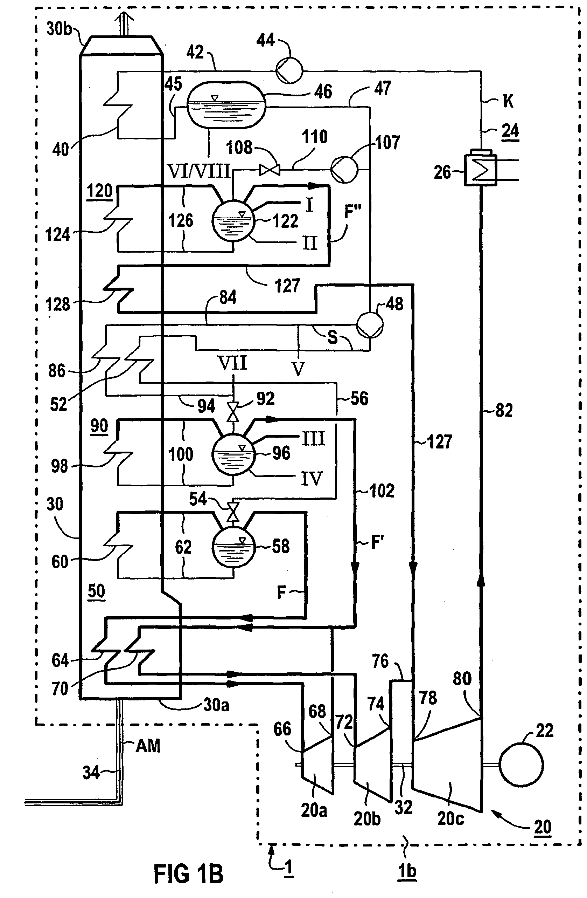

Die Kraftwerksanlage 3 gemäß der Figur 1 ist als Gas- und Dampfturbinenanlage 1 ausgestaltet und umfasst eine Gasturbinenanlage 1a und eine Dampfturbinenanlage 1b. Die Gasturbinenanlage 1a umfasst eine Gasturbine 2 mit angekoppeltem Luftverdichter 4 und eine der Gasturbine 2 vorgeschaltete Brennkammer 6, die an eine Druckluftleitung 8 des Verdichters 4 angeschlossen ist. Die Brennkammer 6 weist einen Brenner 7 auf. Die Gasturbine 2 und der Luftverdichter 4 sowie ein Generator 10 sind auf einer gemeinsamen Welle 12 angeordnet.

Die Dampfturbinenanlage 1b umfasst eine Dampfturbine 20 mit angekoppeltem Generator 22 und in einem Wasser-Dampf-Kreislauf 24 einen der Dampfturbine 20 nachgeschalteten Kondensator 26 sowie einen Abhitzedampferzeuger 30. Die Dampfturbine 20 besteht aus einer ersten Druckstufe oder einem Hochdruckteil 20a und einer zweiten Druckstufe oder einem Mitteldruckteil 20b. Weiterhin ist eine dritte Druckstufe oder ein Niederdruckteil 20c der Dampfturbine 20 vorgesehen, wobei die Druckstufen 20a,20b,20c über eine gemeinsame Welle 32 den Generator 22 antreiben.

Zum Zuführen von in der Gasturbine 2 entspanntem Arbeitsmittel AM oder Rauchgas in den Abhitzedampferzeuger 30 ist eine Abgasleitung 34 an einen Eingang 30a des Abhitzedampferzeugers 30 angeschlossen. Das entspannte Arbeitsmittel AM aus der Gasturbine 2 verlässt den Abhitzedampferzeuger 30 über dessen Ausgang 30b in Richtung auf einen nicht näher dargestellten Kamin.

Der Abhitzedampferzeuger 30 umfasst einen Kondensatvorwärmer 40, der eingangsseitig über eine Kondensatleitung 42 in die eine Kondensatpumpeneinheit 44 geschaltet ist, mit Kondensat K aus dem Kondensator 26 bespeisbar ist. Der Kondensatvorwärmer 40 ist ausgangsseitig über eine Leitung 45 an einen Speisewasserbehälter 46 angeschlossen. Zur bedarfsweisen Umführung des Kondensatvorwärmers 40 kann zudem die Kondensatleitung 42 über eine nicht dargestellte Umführungsleitung direkt mit dem Speisewasserbehälter 46 verbunden sein. Der Speisewasserbehälter 46 ist über eine Leitung 47 an eine Hochdruckspeisepumpe 48 mit Mitteldruckentnahme geschlossen.

Die Hochdruckspeisepumpe 48 bringt das aus dem Speisewasserbehälter 46 abströmende Speisewasser S auf ein für eine dem Hochdruckteil 20a der Dampfturbine 20 zugeordnete Hochdruckstufe 50 im Wasser-Dampfkreislauf 24 geeignetes Druckniveau. Das unter hohem Druck stehende Speisewasser S ist der Hochdruckstufe 50 über einen Speisewasservorwärmer 52 zuführbar, der ausgangsseitig über einen mit einem Ventil 54 absperrbare Speisewasserleitung 56 an eine Hochdrucktrommel 58 angeschlossen ist. Die Hochdrucktrommel 58 ist mit einem im Abhitzedampferzeuger 30 angeordneten Hochdruckverdampfer 60 zur Bildung eines Wasser-Dampfumlaufs 62 verbunden. Zum Abführen von Frischdampf F ist die Hochdrucktrommel 58 an einen im Abhitzedampferzeuger 30 angeordneten Hochdrucküberhitzer 64 angeschlossen, der ausgangsseitig mit dem Dampfeinlass 66 des Hochdruckteils 20a der Dampfturbine 20 verbunden ist.

Der Dampfauslass 68 des Hochdruckteils 20a der Dampfturbine 20 ist über einen Zwischenüberhitzer 70 an den Dampfeinlass 72 des Mitteldruckteils 20b der Dampfturbine 20 angeschlossen. Dessen Dampfauslass 74 ist über eine Überströmleitung 76 mit dem Dampfeinlass 78 des Niederdruckteils 20c der Dampfturbine 20 verbunden. Der Dampfauslass 80 des Niederdruckteils 20c der Dampfturbine 20 ist über eine Dampfleitung 82 an den Kondensator 26 angeschlossen, so dass ein geschlossener Wasser-Dampf-Kreislauf 24 entsteht.

Von der Hochdruckspeisepumpe 48 zweigt zudem an einer Entnahmestelle, an der das Kondensat K einen mittleren Druck erreicht hat, eine Zweigleitung 84 ab. Diese ist über einen weiteren Speisewasservorwärmer 86 oder Mitteldruck-Economiser mit einer dem Mitteldruckteil 20b der Dampfturbine 20 zugeordneten Mitteldruckstufe 90 des Wasser-Dampf-Kreislaufs verbunden. Der zweite Speisewasservorwärmer 86 ist dazu ausgangsseitig über eine mit einem Ventil 92 absperrbare Speisewasserleitung 94 an eine Mitteldrucktrommel 96 der Mitteldruckstufe 90 angeschlossen. Die Mitteldruck-Trommel 96 ist mit einer im Abhitzedampferzeuger 30 angeordneten, als Mitteldruckverdampfer ausgebildeten Heizfläche 98 zur Bildung eines Wasser-Dampf-Umlaufs 100 verbunden. Zum Abführen von Mitteldruck-Frischdampf F' ist die Mitteldrucktrommel 96 über eine Dampfleitung 102 an den Zwischenüberhitzer 70 und somit an den Dampfeinlass 72 des Mitteldruckteils 20b der Dampfturbine 20 angeschlossen.

Von der Leitung 47 zweigt eine weitere, mit einer Niederdruckspeisepumpe 107 versehene und mit einem Ventil 108 absperrbare Leitung 110 ab, die an einem dem Niederdruckteil 20c der Dampfturbine 20 zugeordnete Niederdruckstufe 120 des Wasser-Dampf-Kreislaufs 24 angeschlossen ist. Die Niederdruckstufe 120 umfasst eine Niederdrucktrommel 122, die mit einer im Abhitzedampferzeuger 30 angeordneten, als Niederdruckverdampfer ausgebildeten Heizfläche 124 zur Bildung eines Wasser-Dampf-Umlaufs 126 verbunden ist. Zum Abführen von Niederdruck-Frischdampf F" ist die Niederdrucktrommel 122 über eine Dampfleitung 127, in die ein Niederdrucküberhitzer 128 geschaltet ist, an die Überströmleitung 76 angeschlossen. Der Wasser-Dampf-Kreislauf 24 der Gas- und Dampfturbinenanlage 1 umfasst im Ausführungsbeispiel somit drei Druckstufen 50, 90, 120. Alternativ können aber auch weniger, insbesondere zwei Druckstufen vorgesehen sein.

Die Gasturbinenanlage 1a ist für den Betrieb mit einem vergasten Rohgas oder Synthesegas SG, das durch die Vergasung eines fossilen Brennstoffs B erzeugt wird, ausgelegt. Als Synthesegas SG kann beispielsweise vergaste Kohle oder vergastes Öl vorgesehen sein. Hierzu umfasst die Gasturbinenanlage 1a ein Brennstoffsystem 129, über das dem Brenner 7 in der der Gasturbine 2 zugeordneten Brennkammer 6 Synthesegas SG zuführbar ist. Das Brennstoffsystem 129 umfasst eine Gasleitung 130, die eine Vergasungseinrichtung 132 mit der Brennkammer 6 der Gasturbine verbindet. Der Vergasungseinrichtung 132 ist über ein Eintragsystem 134 Kohle, Erdgas oder Öl als fossiler Brennstoff B zuführbar. Weiterhin umfasst das Vergasungssystem 129 Komponenten, die zwischen der Vergasungseinrichtung 132 und der Brennkammer 6 der Gasturbine 2 in die Gasleitung 130 geschaltet sind.

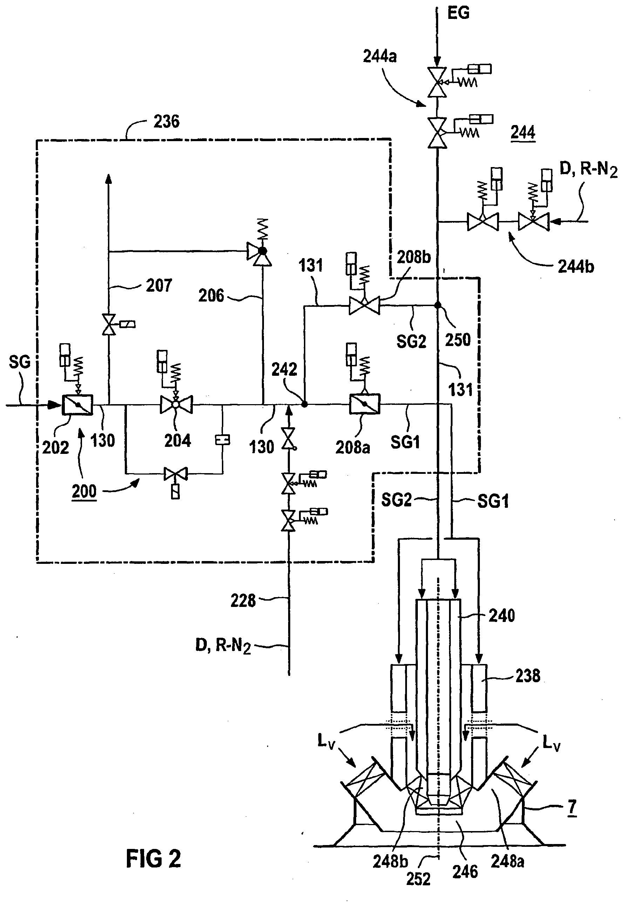

Stromauf der Brennkammer 6 zweigt von der Gasleitung 130 eine weitere Gasleitung 131 ab, wobei die Gasleitung 130 und die weitere Gasleitung 131 separat an den Brenner 7 der Brennkammer 6 angeschlossen sind. Über die Gasleitung 130 und die weitere Gasleitung 131 ist das Synthesegas SG in einen ersten Teilstrom SG1 und einen zweiten Teilstrom SG2 aufteilbar. Die Teilströme SG1, SG2 von Synthesegas SG können dem Brenner 7 zur Verbrennung dabei separat zugeführt werden. Ein erster Teilstrom SG1 ist dabei über die Gasleitung 130 zuführbar und ein zweiter Teilstrom SG2 über die weitere Gasleitung 131. Die weitere Gasleitung 131 zweigt hierbei von der Gasleitung 130 in einem Bereich 236 ab, der in der FIG 2 näher beschrieben ist. Stromab des Bereichs 236 ist die Gasleitung 130 und die weitere Gasleitung 131 im Wesentlichen strömungstechnisch parallel geschaltet und an verschiedenen Anschlussstellen an den Brenner 7 angeschlossen, so dass die Teilströme SG1, SG2 strömungstechnisch getrennt und unabhängig voneinander dem Brenner 7 zuführbar sind.

Zur Bereitstellung des für die Vergasung des fossilen Brennstoffs B benötigten Sauerstoffs O₂ ist der Vergasungseinrichtung 132 über eine Sauerstoffleitung 136 eine dem Brennstoffsystem 129 zugehörige Luftzerlegungsanlage 138 vorgeschaltet. Die Luftzerlegungsanlage 138 ist eingangsseitig mit einem Luftstrom L beaufschlagbar, der sich aus einem ersten Teilluftstrom L1 und einem zweiten Teilluftstrom L2 zusammensetzt. Der erste Teilluftstrom L1 ist der im Luftverdichter 4 verdichteten Luft entnehmbar. Dazu ist die Luftzerlegungsanlage 138 eingangsseitig an eine Entnahmeluftleitung 140 angeschlossen, die an einer Zweigstelle 142 von der Druckluftleitung 8 abzweigt. In die Entnahmeluftleitung 140 mündet zudem eine weitere Luftleitung 143, in die ein zusätzlicher Luftverdichter 144 geschaltet ist und über die der zweite Teilluftstrom L2 der Luftzerlegungsanlage 138 zuführbar ist. Im Ausführungsbeispiel setzt sich somit der der Luftzerlegungsanlage 138 zuströmende gesamte Luftstrom L zusammen aus dem von der Druckluftleitung A abgezweigten Teilluftstrom L2 und aus dem vom zusätzlichen Luftverdichter 144 geförderten Teilluftstrom L2. Ein derartiges Schaltungskonzept wird auch als teilintegriertes Anlagenkonzept bezeichnet. In einer hierzu alternativen Ausgestaltung, dem sogenannten vollintegrierten Anlagenkonzept, kann die weitere Luftleitung 143 mit samt dem zusätzlichen Luftverdichter 144 entfallen, so dass die Bespeisung der Luftzerlegungsanlage 138 mit Luft vollständig über den der Druckluftleitung 8 entnommenen Teilluftstrom L1 erfolgt.

Der in der Luftzerlegungsanlage 138 bei der Zerlegung des Luftstroms L zusätzlich zum Sauerstoff O₂ gewonnene Stickstoff N₂ wird über eine an die Luftzerlegungsanlage 138 angeschlossene Stickstoff-Zufuhrleitung 230 einer Mischvorrichtung 146 zugeführt und dort dem Synthesegas SG zugemischt. Die Mischvorrichtung 146 ist dabei für eine besonders gleichförmige und strähnenfreie Vermischung des Stickstoffs N₂ mit dem Synthesegas ausgebildet. Die Mischvorrichtung 146 ist optional und kann bei anderen Anlagenkonzepten mit geringeren Sauerstoffgehalten im Stickstoff, ggf. auch entfallen.

Das von der Vergasungseinrichtung 132 abströmende Synthesegas SG gelangt über die Gasleitung 130 zunächst in einen Synthesegas-Abhitzedampferzeuger 147, in dem durch Wärmetausch mit einem Strömungsmedium eine Abkühlung des Synthesegases SG erfolgt. Bei diesem Wärmetausch erzeugter Hochdruckdampf wird in nicht näher dargestellter Weise der Hochdruckstufe 50 des Wasser-Dampf-Kreislaufs 24 zugeführt.

In Strömungsrichtung des Synthesegases SG gesehen hinter dem Synthesegas-Abhitzedampferzeuger 147 und vor einer Mischvorrichtung 146 sind die Gasleitung 130 eine Entstaubungseinrichtung 148 für das Synthesegas SG sowie eine Entschwefelungsanlage 149 geschaltet. In alternativer Ausgestaltung kann anstelle der Entstaubungseinrichtung 148, insbesondere bei Vergasung von Öl als Brennstoff, auch eine Rußwäschevorrichtung vorgesehen sein.

Für einen besonders geringen Schadstoffausstoß bei der Verbrennung des vergasten Brennstoffs B in dem in der Brennkammer 6 angeordneten Brenner 7 ist eine Beladung des vergasten Brennstoffs B mit Wasserdampf vor Eintritt in die Brennkammer 6 vorgesehen. Diese kann in wärmetechnisch besonders vorteilhafter Weise in einem Sättigersystem erfolgen. Dazu ist in die Gasleitung 130 ein Sättiger 150 geschaltet, in dem der zu dem Synthesegas SG vergaste Brennstoff B im Gegenstrom zu aufgeheiztem Sättigerwasser W geführt ist. Das Sättigerwasser W zirkuliert dabei in einem an den Sättiger 150 angeschlossenen Sättigerkreislauf 152, in den eine Umwälzpumpe 154 sowie zur Vorheizung des Sättigerwassers W ein Wärmetauscher 156 geschaltet sind. Der Wärmetauscher 156 ist dabei primärseitig mit vorgewärmten Speisewasser auf der Mitteldruckstufe 90 des Wasser-Dampfkreislauf 24 beaufschlagt. Zum Ausgleich der bei der Sättigung des vergasten Brennstoffs auftretenden Verluste an Sättigerwasser W ist an den Sättigerkreislauf 152 eine Einspeiseleitung 158 angeschlossen.

In Strömungsrichtung des Synthesegases SG gesehen hinter dem Sättiger 150 ist in die Gasleitung 130 sekundärseitig ein als Synthesegas-Mischgas-Wärmetauscher wirkender Wärmetauscher 159 geschaltet. Der Wärmetauscher 159 ist dabei primärseitig an einer Stelle vor der Entstaubungsanlage 148 ebenfalls in die Gasleitung 130 geschaltet, so dass das der Entstaubungsanlage 148 zuströmende Synthesegas SG einen Teil seiner Wärme auf das aus dem Sättiger 150 abströmende Synthesegas SG überträgt. Die Führung des Synthesegases SG über den Wärmetauscher 159 vor Eintritt in die Entschwefelungsanlage 149 kann dabei auch bei einem hinsichtlich der anderen Komponenten abgeänderten Schaltungskonzept vorgesehen sein. Insbesondere bei Einschaltung einer Rußwäscheeinrichtung kann der Wärmetauscher 159 bevorzugt synthesegasseitig stromab der Rußwäscheeinrichtung eingeordnet sein.

Zwischen den Sättiger 150 und den Wärmetauscher 159 ist in die Gasleitung 130 sekundärseitig ein weiterer Wärmetauscher 160 geschaltet, der primärseitig speisewasserbeheizt oder auch dampfbeheizt sein kann. Durch den als Synthesegas-Reingas-Wärmetauscher gebildeten Wärmetauscher 159 und den Wärmetauscher 160 ist eine besonders zuverlässige Vorwärmung des dem Brenner 7 der Brennkammer 6 der Gasturbine 2 zuströmenden Synthesegas SG auch bei verschiedenen Betriebszuständen der Gas- und Dampfturbinenanlage 1 gewährleistet. Zur Kühlung des der Luftzerlegungsanlage 138 zuzuführenden, auch als Entnahmeluft bezeichneten Teilstroms L1 verdichteter Luft ist in die Entnahmeluftleitung 140 primärseitig ein Wärmetauscher 162 geschaltet, der sekundärseitig als Mitteldruckverdampfer für ein Strömungsmedium S' ausgebildet ist. Der Wärmetauscher 162 ist zur Bildung eines Verdampferumlaufs 163 mit einer als Mitteldrucktrommel ausgebildeten Wasser-Dampf-Trommel 146 verbunden. Die Wasser-Dampf-Trommel 164 ist über Leitungen 166, 168 mit der dem Wasser-Dampf-Umlauf 100 zugeordneten Mitteldrucktrommel 96 verbunden. Alternativ kann der Wärmetauscher 162 sekundärseitig aber auch direkt an die Mitteldrucktrommel 96 angeschlossen sein. Im Ausführungsbeispiel ist die Wasser-Dampf-Trommel 164 also mittelbar an die als Mitteldruckverdampfer ausgebildete Heizfläche 98 angeschlossen. Zur Nachspeisung von verdampftem Strömungsmedium S' ist an die Wasser-Dampf-Trommel 164 zudem eine Speisewasserleitung 170 angeschlossen.

In Strömungsrichtung des Teilstroms L1 verdichteter Luft gesehen nach dem Wärmetauscher 162 ist in die Entnahmeluftleitung 140 ein weiterer Wärmetauscher 172 geschaltet, der sekundärseitig als Niederdruckverdampfer für ein Strömungsmedium S" ausgebildet ist. Der Wärmetauscher 172 ist dabei zur Bildung eines Verdampferumlaufs 174 an eine als Niederdrucktrommel ausgebildete Wasser-Dampf-Trommel 176 angeschlossen. Im Ausführungsbeispiel ist die Wasser-Dampf-Trommel 176 über Leitungen 178, 180 an die dem Wasser-Dampf-Umlauf 126 zugeordnete Niederdrucktrommel 122 angeschlossen und somit mittelbar mit der Niederdruckverdampfer ausgebildeten Heizfläche 124 verbunden. Alternativ kann die Wasser-Dampf-Trommel 176 aber auch in anderer geeigneter Weise geschaltet sein, wobei der Wasser-Dampf-Trommel 176 entnommener Dampf einem Nebenverbraucher als Prozessdampf und/oder als Heizdampf zuführbar ist. In weiterer alternativer Ausgestaltung kann der Wärmetauscher 172 sekundärseitig auch direkt an die Niederdrucktrommel 122 angeschlossen sein. Die Wasser-Dampf-Trommel 176 ist zudem an eine Speisewasserleitung 182 angeschlossen.

Die Verdampferumläufe 163, 174 können jeweils als Zwangsumlauf ausgebildet sein, wobei der Umlauf des Strömungsmediums S' bzw. S" durch eine Umwälzpumpe gewährleistet ist und wobei das Strömungsmedium S', S" im als Verdampfer ausgebildeten Wärmetauscher 162 bzw. 172 mindestens teilweise verdampft. Im Ausführungsbeispiel sind jedoch sowohl der Verdampferumlauf 163 als auch der Verdampferumlauf 174 jeweils als Naturumlauf ausgebildet, wobei der Umlauf des Strömungsmediums S' bzw. S" durch die sich beim Verdampfungsprozess einstellenden Druckdifferenzen und/oder durch die geodäthische Anordnung des jeweiligen Wärmetauschers 162 bzw. 172 und der jeweiligen Wasser-Dampf-Trommel 164 bzw. 176 gewährleistet ist. Bei dieser Ausgestaltung ist in den Verdampferumlauf 163 bzw. in den Verdampferumlauf 174 jeweils lediglich eine nicht näher dargestellte vergleichsweise gering dimensionierte Umwälzpumpe zum Anfahren des Systems geschaltet.

Zur Wärmeeinkopplung in den Sättigerkreislauf 152 ist zusätzlich zum Wärmetauscher 156, der mit aufgeheiztem, nach dem Speisewasservorwärmer 86 abgezweigtem Speisewasser S beaufschlagbar ist, ein Sättigerwasser-Wärmetauscher 184 vorgesehen, der primärseitig mit Speisewasser S aus dem Speisewasserbehälter 46 beaufschlagbar ist. Dazu ist der Sättigerwasser-Wärmetauscher 184 primärseitig eingangsseitig über eine Leitung 186 an die Zweigleitung 84 und ausgangsseitig über eine Leitung 88 an den Speisewasserbehälter 46 angeschlossen. Zur Wiederaufheizung des aus dem Speisewasser-Wärmetauscher 184 abströmenden gekühlten Speisewasser S ist in die Leitung 188 ein zusätzlicher Wärmetauscher 190 geschaltet, welcher primärseitig dem Wärmetauscher 172 in der Entnahmeluftleitung 140 nachgeschaltet ist. Durch eine derartige Anordnung ist eine besonders hohe Wärmerückgewinnung aus der Entnahmeluft und somit ein besonders hoher Wirkungsgrad der Gas- und Dampfturbinenanlage 1 erreichbar. In Strömungsrichtung des Teilluftstroms L1 gesehen zwischen dem Wärmetauscher 172 und dem Wärmetauscher 190 zweigt von der Entnahmeluftleitung 140 eine Kühlluftleitung 192 ab, über die der Gasturbine 2 eine Teilmenge L' des gekühlten Teilstrom L als Kühlluft zur Schaufelkühlung zuführbar ist. Diese Ausführungsform findet gelegentlich Anwendung.

Beim Betrieb der Gas- und Dampfturbinenanlage 1 wird dem Brenner 7 der Gasturbine 2 Synthesegas SG zugeführt, welches durch Vergasung des fossilen Brennstoffs B in der Vergasungseinrichtung 132 gewonnen wurde. Das Synthesegas SG wird hierbei im Bereich 236 in einen ersten Teilstrom SG1 und einen zweiten Teilstrom SG2 aufgeteilt und die Teilströme SG1, SG2 dem Brenner 7 zur Verbrennung separat zugeführt. Der erste Teilstrom SG und der zweite Teilstrom SG2 können dabei jeweils geregelt dem Brenner 7 zugeführt werden.

Das Schaltungskonzept, welches dem Synthesegasbetrieb des Brenners 7 der Gasturbine 2 zugrunde liegt, ist im Detail in FIG 2 dargestellt. FIG 2 zeigt dabei im Wesentlichen eine vergrößerte Abbildung des Bereichs 236 gemäß FIG 1 und den entsprechenden Anschluss an den vergrößert dargestellten Brenner 7. Der Brenner 7 ist in einer Brennkammer 6 angeordnet, wobei die Brennkammer 6 der Gasturbine 2 zugeordnet ist (vgl. FIG 1). Im Bereich 236 zweigt an einer Abzweigstelle 242 die weitere Gasleitung 131 von der Gasleitung 130 ab. Der Brenner 7 weist eine Brennerachse 252 auf, entlang derer sich eine erste Brennstoffpassage 238 und eine von der ersten Brennstoffpassage 238 strömungstechnisch getrennte zweite Brennstoffpassage 240 erstreckt. Weiterhin weist der Brenner einen Verbrennungsraum 246 auf, in dem eine erste Verbrennungszone 248a sowie eine zweite Verbrennungszone 248b gebildet ist. Die erste Verbrennungszone 248a ist der ersten Brennstoffpassage 238 zugeordnet und die zweite Verbrennungszone 248b der zweiten Brennstoffpassage 240. Die Verbrennungszonen 248a, 248b können sich hierbei zumindest teilweise räumlich überlappen. Die Brennstoffpassagen 238, 240 sind radial voneinander beabstandet um die Brennerachse 252 des Brenners 7 angeordnet, wobei die Brennstoffpassagen 238, 240 jeweils einen zylinderförmigen Ringraum bilden. Im Betrieb des Brenners 7 ist dieser mit Verbrennungsluft L_{V} beaufschlagt, welche über die Druckluftleitung 8 dem Verdichter 4 entnommen ist (siehe FIG 1) . Weiterhin ist die Gasleitung 130 an die erste Brennstoffpassage 238 und die weitere Gasleitung 131 an die zweite Brennstoffpassage 240 angeschlossen, so dass ein erster Teilstrom SG1 von Synthesegas SG der ersten Brennstoffpassage 238 und ein zweiter Teilstrom SG2 von Synthesegas SG der zweiten Brennstoffpassage 240 zur Verbrennung zugeführt wird. Dabei wird der erste Teilstrom SG1 in der ersten Verbrennungszone 248a und der zweite Teilstrom SG2 in der zweiten Verbrennungszone 248b mit Verbrennungsluft L beladen und verbrannt, wobei heiße Verbrennungsgase gebildet werden, mit denen die Gasturbine 2 beaufschlagt wird.

Beim Abfahren des Brennstoffsystems 129 gemäß FIG 1A ist eine Spülung erforderlich. Dies erfolgt in der Weise, dass in einem oder mehreren Schritten ein erster und ein zweiter Bereich des Brennstoff-Vergasungssystems 129 separat mit Stickstoff N₂ gespült werden. Das Vergasungssystem oder der erste Bereich und das Gasturbinen-Brennstoffsystem - oder der zweite Bereich sind dabei durch ein in FIG 2 gezeigte Gasschloss 200 im Bereich 236 voneinander getrennt. Das Gasschloss 200 ist hierbei in die Gasleitung 130 geschaltet, wobei das Gasschloss 200 stromauf der Abzweigstelle 242 der weiteren Gasleitung 131 von der Gasleitung 130 angeordnet ist. Das Vergasungssystem selbst umfasst dabei die Vergasungseinrichtung 132 bis zum Gasschloss 200 und das Gasturbinen-Brennstoffsystem umfasst das Gasschloss 200 und die nachgeschalteten Komponenten bis zu der den Brenner 7 aufweisenden Brennkammer 6 der Gasturbine 2.

Das Gasschloss 200 umfasst eine in die Gasleitung 130 angeordnete Schnellschlussarmatur 202, der unmittelbar eine als Kugelhahn ausgeführte Gasschlossarmatur 204 nachgeschaltet ist. Über die Abgasleitung 207 wird Restgas beim Spülen nach Abschaltung der Vergasungseinrichtung 132 oder beim Spülen des Sättigers 150 und nachgeschalteten Wärmetauschers zu einer Fackel abgeführt. Die Abgasleitung 207 mit zugehöriger Armatur dient als Druckentlastungssystem 206 des Gasschlosses 200. Über das Gasschloss 200 ist die Gasleitung 130 gasdicht absperrbar und bei Bedarf über die Schnellschlussarmatur 202 in besonders kurzer Zeit verschließbar.

Dem Gasschloss 200 ist unmittelbar eine in die Gasleitung 130 geschaltete Regelarmatur 208a nachgeschaltet, über die der erste Teilstrom SG1 von Synthesegas SG zum Brenner 7 geregelt wird. Eine weitere Regelarmatur 208b ist in die von der Gasleitung 130 abzweigende weitere Gasleitung 131 geschaltet. Über die Regelarmatur 208b ist der zweite Teilstrom SG2 von Synthesegas SG zum Brenner 7 regelbar.

Zur Spülung des Vergasungssystems oder des ersten Bereichs des Brennstoffsystems mit Stickstoff N₂, also von der Vergasungseinrichtung 132 bis zum Gasschloss 200 ist Rein-Stickstoff R-N₂ aus der Luftzerlegungsanlage 138 vorgesehen. Hierzu wird der in der Luftzerlegungsanlage 138 bei der Zerlegung des Luftstroms L zusätzlich zum Sauerstoff O₂ erzeugte Stickstoff N₂ als Rein-Stickstoff R-N₂ über eine Zufuhrleitung 210 aus der Luftzerlegungsanlage 138 abgeführt. Von der ersten Zufuhrleitung 210 zweigt eine mit einem Ventil 212 absperrbare Zweigleitung 214 ab, die zum Spülen des ersten Bereichs des Brennstoffsystems 129 und die Vergasungseinrichtung 132 für fossilen Brennstoff mündet.

Zur Spülung des zweiten Bereichs oder des Gasturbinen-Brennstoffsystems mit Stickstoff N₂ als Spülmedium ist ebenfalls Rein-Stickstoff R-N₂ vorgesehen. Hierzu mündet die Zufuhrleitung 210 in einen Stickstoffspeicher 220. In die Zufuhrleitung 210 mündet zusätzlich eine mit dem Ventil 222 absperrbare Reserveleitung 224, die eingangsseitig an ein Notbefüllsystem 226 für Rein-Stickstoff R-N₂ angeschlossen ist. Dadurch, dass der Stickstoffspeicher 220 sowohl an die Luftzerlegungsanlage 138 als auch an das Notbefüllsystem 226 angeschlossen ist, kann er sowohl mit Rein-Stickstoff R-N₂ aus der Luftzerlegungsanlage als auch mit Rein-Stickstoff R-N₂ aus dem Notbefüllsystem 226 beschickt werden. Dadurch ist auch bei einem Ausfall der Luftzerlegungsanlage 138 eine Spülung des Vergasungssystems 129 besonders zuverlässig gewährleistet. Der Stickstoffspeicher 226 ist dabei so dimensioniert, dass er den Bedarf an Rein-Stickstoff R-N₂ für den Spülvorgang einschließlich ausreichend hoher Reservekapazität abdeckt. Der Stickstoffspeicher 226 ist ausgangsseitig über eine Spülleitung 228 an die Gasleitung 130 angeschlossen. Die Einmündung der Spülleitung 228 in die Gasleitung 130 erfolgt stromab des Synthesegases SG im Bereich unmittelbar nach dem Gasschloss 200, also nach der Gasschlossarmatur 204.

Von der Luftzerlegungsanlage 138 (FIG 1) zweigt zum Zuführen von in der Luftzerlegungsanlage 138 erzeugtem unreinen Stickstoff U-N₂ eine zweite Zufuhrleitung 230 ab, die in die Mischvorrichtung 146 mündet. In der Mischvorrichtung 146 wird der Unrein-Stickstoff U-N₂ dem Synthesegas SG zur Verringerung der NOₓ-Emissionen der Gasturbine zugemischt. Die Mischvorrichtung 146 ist dabei für eine besonders gleichförmige und strähnenfreie Vermischung des Stickstoffs N₂ mit dem Synthesegas SG ausgebildet.

Bei jedem Umlasten der Gasturbine 2 von Synthesegas SG auf einen Zweitbrennstoff, was einem Wechsel des dem Brenner 7 der Brennkammer 6 zugeführten Brenngases entspricht, ist eine Spülung des Gasturbinen-Brennstoffsystems 129 mit Stickstoff vorgesehen. Durch den Spülvorgang muss das sich im Gasturbinen-Brennstoffsystem 129 befindliche Synthesegas SG aus sicherheitstechnischen Gründen annähernd vollständig verdrängt werden.

Im Synthesegasbetrieb, d.h. bei Verbrennung von Synthesegas SG, welches in Teilströmen SG1 und SG2 den in FIG 2 gezeigten zugeordneten Brennstoffpassagen 240, 238 zur Verbrennung zugeführt wird, wird dem zweiten Teilstrom SG2 Erdgas EG oder Dampf D zugemischt. Dadurch kann der Heizwert des für den Betrieb der zweiten Brennstoffpassage 240 verwendeten ersten Teilstroms SG1 je nach Anforderung erhöht bzw. verringert werden. Dazu ist eine Zufuhreinrichtung 244 vorgesehen, welche ein Erdgas-Zufuhrsystem 244a sowie ein weiteres Zufuhrsystem 244b für Dampf D oder Rein-Stickstoff R-N₂ umfasst. Die Zufuhreinrichtung 244 ist an einer Anschlussstelle 250 im Bereich 236 an die weitere Gasleitung 131 angeschlossen, so dass bedarfsweise die Einspeisung eines entsprechenden Fluids, in die weitere Gasleitung 131 und zu der zweiten Brennstoffpassage 240 über die Zufuhreinrichtung 244 möglich ist. Dabei ist vorteilhafterweise die zweite Brennstoffpassage 240 unabhängig von der ersten Brennstoffpassage 238 mit Synthesegas SG versorgt. Weiterhin sind die Teilströme SG1, SG2 unabhängig voneinander mit Rein-Stickstoff R-N₂ oder Dampf D über die Spülleitung 228 bzw. das weitere Zufuhrsystem 244b der Zufuhreinrichtung 244 beaufschlagbar und damit spülbar. Beide Synthesegas-Teilströme SG1, SG2 können somit mit unterschiedlichem regelbarem Heizwert betrieben werden. Das Zufuhrsystem 244, welches der zweiten Brennstoffpassage 240 zugeordnet ist, erfüllt hierbei zwei Aufgaben, nämlich die NOₓ-Reduzierung in einem Erdgasbetrieb sowie die gezielte Heizwerteinstellung und betriebliche Steuerung der Verbrennung im Synthesegasbetrieb.

Durch dieses neue Verfahren zum Betrieb eines Brenners 7 und mit dem beschriebenen Anlagenkonzept ist ein gestufter Betrieb einer Kraftwerksanlage 3 mit Synthesegas SG möglich. Dieser Synthese-Betrieb zeichnet sich zum einen durch einen hinreichend niedrigen Druckverlust im Volllastfall bei Durchströmen beider Brennstoffpassagen 238, 240 mit jeweiligen Teilströmen SG1, SG2 aus. Zum anderen ist aber auch bei einem Minimallast- bzw. Leerlaufbetrieb der Gasturbine 2 mit Synthesegas SG der erforderliche Mindestdruckverlust durch eine bedarfsweise alleinige Nutzung beispielsweise der zweiten Brennstoffpassage 240 gewährleistet. Hierzu kann die zweite Brennstoffpassage 240 einen größeren Strömungswiderstand als die erste Brennstoffpassage 238 durch entsprechende konstruktive Ausgestaltung und Dimensionierung der zweiten Brennstoffpassage 240 aufweisen. Die simultane Nutzung beider Brennstoffpassagen 238, 240, die unterschiedliche Strömungswiderstände aufweisen können, ermöglicht bei vorgegebenen Variationsbereich des dem Brenner 7 zugeführten gesamten Brennstoffmassenstromes einen im Verhältnis zu den bisher bekannten Systemen wesentlich kleinere Variationsbreite des Druckverlustes. Infolgedessen ist der Druckverlust bei Grundlast im Vergleich zu dem Druckverlust bei einer Minimallast, z.B. bei Leerlauf der Gasturbine 2, kleiner als bei einem Einpassagenkonzept sein, bei dem nur ein Synthesegasstrom einem Brenner 7 zur Verbrennung zugeführt wird.

Durch die Anpassung des Verdünnungsverhältnisses des Synthesegases SG über die Zufuhreinrichtung 244, welches der zweiten Brennstoffpassage 240 zugestellt wird, kann die erste Brennstoffpassage 238, die als Hauptpassage für das Synthesegas SG dienen kann, stabilisiert werden. Bei geringer Verdünnung des zweiten Teilstroms SG2 von Synthesegas SG durch die zweite Brennstoffpassage 240 kann die zweite Brennstoffpassage 240 als Pilotflamme für die ggf. stärker verdünnte erste Brennstoffpassage 238 dienen. Darüber hinaus besteht durch gezielte Einflussnahme auf das Verdünnungsverhältnis die Möglichkeit sehr effizient Flammenschwingungen ohne aufwendige Änderungen der Geometrie des Brenners 7 allein durch Vertrimmen der Teilströme SG1, SG2 zu beeinflussen. Durch das Zweistromkonzept des mit dem Verfahren gemäß der Erfindung betriebenen Brenners 7 ist in besonders vorteilhafter Weise eine Anpassung des Verbrennungsverhaltens möglich. Hierdurch wird die Möglichkeit zur Optimierung des Verbrennungsverhaltens hinsichtlich Verbrennungsschwingungen und Brennertemperaturen durch Anpassung der jeweiligen Betriebseinstellung deutlich verbessert. Die Erfindung zeichnet sich dabei insbesondere dadurch aus, dass mindestens eine Brennstoffpassage des Brenners 7, z.B. die zweite Brennstoffpassage 240, in doppelter Funktion nutzbar ist, nämlich als Synthesepassage im Synthesegasbetrieb oder als Brennstoffpassage für einen weiteren gasförmigen Brennstoff (B), z.B. Erdgas (EG) im Erdgasbetrieb. Dabei ist es auch möglich ein Gemisch aus Synthesegas und Erdgas erforderlichenfalls mit Dampfzuschlag einer Brennstoffpassage zuzuführen und einen neuartigen Mischbetrieb zu realisieren.

## Patentansprüche

1. Verfahren zum Betrieb eines Brenners (7) einer Gasturbine (2), bei dem ein fossiler Brennstoff (B) vergast und vergaster fossiler Brennstoff (B) als Synthesegas (SG) dem der Gasturbine (2) zugeordneten Brenner (7) zur Verbrennung zugeführt wird, wobei das Synthesegas (SG) in einen ersten Teilstrom (SG1) und einen zweiten Teilstrom (SG2) aufgeteilt und die Teilströme (SG1,SG2) dem Brenner (7) zur Verbrennung separat zugeführt werden,
**dadurch gekennzeichnet , dass** zumindest einem der Teilströme (SG1,SG2) Erdgas (EG) oder Dampf (D) zur Veränderung des Heizwerts zugemischt wird.

2. Verfahren nach Anspruch 1,
**dadurch gekennzeichnet , dass** der erste Teilstrom (SG1) und der zweite Teilstrom (SG2) jeweils geregelt dem Brenner (7) zugeführt werden.

3. Verfahren nach Anspruch 1, oder 2,
**dadurch gekennzeichnet , dass** die Teilströme (SG1, SG2) in Abhängigkeit von der zu erbringenden Leistung der Gasturbine (2) eingestellt werden.

4. Verfahren nach einem der vorhergehenden Ansprüche,
**dadurch gekennzeichnet , dass** bei einem Minimallast- oder Leerlaufbetrieb der Gasturbine (2) einer der Teilströme (SG1,SG2) Null ist.

5. Kraftwerksanlage (3), insbesondere zur Durchführung des Verfahrens nach einem der vorhergehenden Ansprüche, mit einer Gasturbine (2), der eine Brennkammer (6) mit mindestens einem Brenner (7) zugeordnet ist, und mit einem der Brennkammer (6) vorgeschalteten Brennstoffsystem (129), das eine Vergasungseinrichtung (132) für fossilen Brennstoff (B) und eine von der Vergasungseinrichtung (132) abzweigende und in die Brennkammer (6) mündende Gasleitung (130) umfasst, wobei stromauf der Brennkammer (6) von der Gasleitung (130) eine weitere Gasleitung (131) abzweigt, wobei die Gasleitung (130) an eine erste Brennstoffpassage (238) des Brenners (7) und die weitere Gasleitung (131) an eine von der ersten Brennstoffpassage (238) strömungstechnisch getrennte zweite Brennstoffpassage (240) des Brenners (7) angeschlossen ist,
**dadurch gekennzeichnet , dass** der weiteren Gasleitung (131) Erdgas (EG) oder Dampf (D) über eine Zufuhreinrichtung (244) zustellbar ist.

6. Kraftwerksanlage (3) nach Anspruch 5,
**dadurch gekennzeichnet , dass** in der Gasleitung (130) und der weiteren Gasleitung (131) jeweils eine Regelarmatur (208a,208b) vorgesehen ist, über die der Brennstoffstrom in den zugeordneten Brennstoffpassagen (238,240) jeweils regelbar ist.

7. Kraftwerksanlage (3) nach Anspruch 5 oder 6,
**dadurch gekennzeichnet , dass** in die Gasleitung (130) ein Gasschloss (200) geschaltet ist, welches stromauf der Abzweigstelle (242) der weiteren Gasleitung (131) von der Gasleitung (130) angeordnet ist.

8. Kraftwerksanlage (3) nach einem der Ansprüche 5 bis 7,
**gekennzeichnet durch** eine Ausgestaltung als Gas- und Dampfturbinenanlage (1) mit einem der Gasturbine (2) rauchgasseitig nachgeschalteten Abhitzedampferzeuger (30), dessen Heizflächen in den Wasser-Dampf-Kreislauf (24) einer Dampfturbine (20) geschaltet sind.

## Claims

1. Method for operating a burner (7) of a gas turbine (2), in which a fossil fuel (B) is gasified, and gasified fossil fuel (B) is fed as synthesis gas (SG) to the burner (7) assigned to the gas turbine (2) in order to be burnt, wherein the synthesis gas (SG) is divided into a first part-stream (SG1) and a second part-stream (SG2), and the part-streams (SG1, SG2) are fed separately to the burner (7) in order to be burnt, **characterized in that** natural gas (EG) or steam (D) is admixed to at least one of the part-streams (SG1, SG2) in order to change the calorific value.

2. Method according to Claim 1, **characterized in that** the first part-stream (SG1) and the second part-stream (SG2) are each fed to the burner (7) in a controlled manner.

3. Method according to Claim 1, or 2, **characterized in that** the part-streams (SG1, SG2) are set as a function of the power which is to be produced by the gas turbine (2).

4. Method according to one of the preceding claims, **characterized in that** during minimum-load or idling operation of the gas turbine (2), one of the part-streams (SG1, SG2) is zero.

5. Power plant installation (3), in particular for carrying out the method according to one of the preceding claims, having a gas turbine (2), which is assigned a combustion chamber (6) having at least one burner (7), and having a fuel system (129), which is connected upstream of the combustion chamber (6) and comprises a gasification device (132) for fossil fuel (B) and a gas line (130) which branches off from the gasification device (132) and opens out into the combustion chamber (6), wherein a further gas line (131) branches off from the gas line (130) upstream of the combustion chamber (6), the gas line (130) being connected to a first fuel passage (238) of the burner (7) and the further gas line (131) being connected to a second fuel passage (240), which is separated in terms of flow from the first fuel passage (238), of the burner (7), **characterized in that** natural gas (EG) or steam (D) can be delivered to the further gas line (131) via a feed device (244).

6. Power plant installation (3) according to Claim 5, **characterized in that** a control fitting (208a, 208b), by means of which the flow of fuel in the associated fuel passages (238, 240) can in each case be controlled, is provided in the gas line (130) and in the further gas line (131), respectively.

7. Power plant installation (3) according to Claim 5 or 6, **characterized in that** a gas lock (200), which is arranged upstream of the location (242) where the further gas line (131) branches off from the gas line (130), is connected into the gas line (130).

8. Power plant installation (3) according to one of Claims 5 to 7, **characterized by** a configuration as a gas and stream turbine installation (1) having a heat recovery steam generator (30) which is connected downstream of the gas turbine (2) on the flue gas side and the heating surfaces of which are connected into the water-steam circuit (24) of a steam turbine (20).

## Revendications

1. Procédé pour faire fonctionner un brûleur (7) d'une turbine (2) à gaz, dans lequel on gazéifie un combustible (B) fossile et on envoie, pour la combustion, du combustible (B) fossile gazéifié, en tant que gaz (SG) de synthèse, au brûleur (7) associé à la turbine (2) à gaz, dans lequel on subdivise le gaz (SG) de synthèse en un premier courant (SG1) partiel et en un deuxième courant (SG2) partiel et on envoie séparément les courants (SG1, SG2) partiels au brûleur (7) pour la combustion,
**caractérisé en ce que** l'on ajoute à au moins l'un des courants (SG1, SG2) partiels du gaz (EG) naturel ou de la vapeur (D) pour modifier la valeur calorifique.

2. Procédé suivant la revendication 1,
**caractérisé en ce que** l'on envoie le premier courant (SG1) partiel et le deuxième courant (SG2) partiel respectivement d'une manière régulée au brûleur (7).

3. Procédé suivant la revendication 1 ou 2, **caractérisé en ce que** l'on règle les courants(SG1, SG2) partiels en fonction de la puissance de la turbine (2) à gaz à fournir.

4. Procédé suivant l'une des revendications précédentes, **caractérisé en ce que**, pour un fonctionnement à charge minimum ou en marche à vide de la turbine (2) à gaz, l'un des courants (SG1, SG2) partiels est nul.

5. Centrale (3) électrique, notamment pour la mise en oeuvre du procédé suivant l'une des revendications précédentes, comprenant une turbine (2) à gaz, à laquelle est associée une chambre de combustion (6) ayant au moins un brûleur (7), et un système (129) de combustible monté en amont de la chambre (6) de combustion et ayant un dispositif (132) de gazéification de combustible (B) fossile et un conduit (130) pour du gaz partant du dispositif (132) de gazéification et débouchant dans la chambre de combustion (6), dans laquelle, en amont de la chambre de combustion (6) part, en dérivation du conduit (130) pour du gaz, un autre conduit (131) pour du gaz, le conduit (130) pour du gaz étant raccordé à un premier passage (238) du brûleur (7) pour du combustible et l'autre conduit (131) pour du gaz étant raccordé à un deuxième passage (240) du brûleur (7) pour du combustible, séparé du point de vue de la technique d'écoulement du premier passage (138) pour du combustible, **caractérisée en ce que** du gaz (EG) naturel ou de la vapeur (D) peut être envoyé à l'autre conduit (131) pour du gaz par un dispositif (244) d'apport.

6. Centrale (3) électrique suivant la revendication 5,
**caractérisée en ce qu'**il est prévu dans le conduit (130) pour du gaz et dans l'autre conduit (131) pour du gaz respectivement, un robinet (208a, 208b) de régulation, par lequel le courant de combustible dans les passages (238, 240) associés pour du combustible peut être réglé respectivement.

7. Centrale (3) électrique suivant la revendication 5 ou 6,
**caractérisée en ce que** dans le conduit (130) pour du gaz est monté un obturateur (200) pour du gaz, qui est monté en amont du point (242) de bifurcation de l'autre conduit (131) pour du gaz du conduit (130) pour du gaz.

8. Centrale (3) électrique suivant l'une des revendications 5 à 7,
**caractérisée par** un agencement en installation (1) à turbine à gaz et à turbine à vapeur, ayant un générateur (30) de vapeur à récupération de la chaleur perdue, qui est monté en aval du côté du gaz de fumée de la turbine (2) à gaz et dont les surfaces de chauffe sont montées dans le circuit (24) eau-vapeur d'une turbine (20) à vapeur.
